(19) Europäisches Patentamt
European Patent Office
Office européen des brevets

(11) Publication number : **0 581 539 A2**

(12) # EUROPEAN PATENT APPLICATION

(21) Application number : **93305835.6**

(51) Int. Cl.$^5$ : **C08L 83/04,** C09J 183/04

(22) Date of filing : **23.07.93**

(30) Priority : **30.07.92 US 923111**

(43) Date of publication of application :
**02.02.94 Bulletin 94/05**

(84) Designated Contracting States :
**DE FR GB**

(71) Applicant : **GENERAL ELECTRIC COMPANY**
**1 River Road**
**Schenectady, NY 12345 (US)**

(72) Inventor : **Lin, Shaow Burn**
**934 Douglas Court**
**Schenectady, New York 12309 (US)**
Inventor : **Griswold, Roy Melvin**
**Reg. Isezaki 905, Chuo-cho 1-11**
**Isezaki-shi, Gunma-ken (JP)**
Inventor : **Cooper, William Edward**
**30 Presbyterian Hill Road, Stephentown**
**New York 12168 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Organopolysiloxane compositions.**

(57) A solventless or high solids-containing organopolysiloxane composition curable to produce a pressure sensitive adhesive having high tack and high peel adhesion, comprising (A) a toluene soluble, resinous copolymer comprising $R_3SiO_{1/2}$ units and $SiO_{4/2}$ units ; (B) a hydride-terminated organopolysiloxane having a viscosity of from about 10 to about 1000 centipoise at 25°C ; an alkenyl silicone blend which is compatible with (A) and (B), comprising (C) (i) from O to about 90 mole% of a alkenyl-terminated polyorganosiloxane polymer having a viscosity of from about 10 to about 500 centipoise at 25°C ; and (C) (ii) from about 10 to 100 mole% of a silicon-bonded alkenyl group which based on the total available alkenyl group in the blend is a siloxane polymer containing more than 2 silicon-bonded alkenyl groups per chain or molecule ; (D) a catalytic amount of a hydrosilation catalyst ; and (E) from O to about 40% by weight of an organic solvent. Components (B) and (C) being present in sufficient quantities to provide a total SiH/Sialkenyl ration of about 1.1 :1 to about 15 :1. Furthermore this invention includes a method of making a pressure sensitive adhesive.

EP 0 581 539 A2

Jouve, 18, rue Saint-Denis, 75001 PARIS

## Cross-Reference To Related Applications

This application is related to previously filed pending application Nos. 07/ (Attn. Dock. No. 60SI-1406), 07/ (Attn. Dock. No. 60SI-1455), and 07/ - (Attn. Dock. No. 60SI-1499), the entire disclosures of which are incorporated herein by reference.

## Field of the Invention

The present invention relates to silicone compositions suitable for forming pressure sensitive adhesive compositions. More particularly, the present invention relates to vinyl crosslinked, solventless or high solids-containing, addition-curable silicone compositions suitable for forming pressure sensitive adhesive compositions having excellent tack and adhesive properties.

## Technology Review

The term "pressure sensitive adhesive" (PSA) as used herein refers to adhesives that can be adhered to a surface and yet can be stripped from the surface without transferring more than trace quantities of adhesive to the surface, and can be readhered to the same or another surface because the adhesive retains some or all of its tack and adhesive strength.

Silicone pressure sensitive adhesives have an excellent adhesive strength, tack, and cohesive strength, which are the properties required of a pressure sensitive adhesive. In addition, they also have the heat resistance, cold resistance, dielectric properties, and the like, characteristic of silicones, and so are widely used for electrical-insulating tape, which must be highly reliable, and for various pressure-sensitive products which must be resistant to hot and cold.

A drawback associated with the use of silicone pressure sensitive adhesives is the use, handling, and emission of flammable and volatile organic compounds, e.g., organic solvents, in the preparation of the pressure sensitive adhesives from composition containing high levels of organic solvent. Solvent is generally used for the purpose of reducing the viscosity of the composition to a level which renders the curable composition processable. It is desirable, therefore, to provide solventless or high solids containing (i.e., low solvent-containing) polyorganosiloxane compositions for use in the preparation of pressure sensitive adhesives.

Another drawback associated with conventional pressure sensitive adhesives is the requirement for a high temperature, e.g., 165°C, to effectively cure the pressure sensitive adhesive using a peroxide catalyst. Such pressure sensitive adhesives cannot be used on substrates sensitive to high temperatures, for example, polyolefin-backed substrates, due to their temperature incompatibility.

Addition-curable silicone compositions capable of curing to form pressure sensitive adhesive compositions are known in the art.

European Patent Application No. 0355991 (Boardman) is directed to a pressure sensitive adhesive composition having a high solids content, i.e., typically in excess of 95% by weight, preferably in excess of 98% by weight, comprising (a) a benzene soluble resinous copolymer consisting of $R^1R^{11}R^{111}SiO_{1/2}$ units and $SiO_{4/2}$ units and containing silicon-bonded hydroxyl radicals ranging from 1 to 4 percent by weight of the copolymer, (b) a diorganoalkenylsiloxy endblocked polydiorganosiloxane, (c) a diorganohydrogensiloxy endblocked polydiorganosiloxane, (d) a crosslinking agent, and (e) a hydrosilation catalyst. The crosslinking agent used in Boardman is selected from low and high molecular weight polyorganosiloxanes having the general formulae

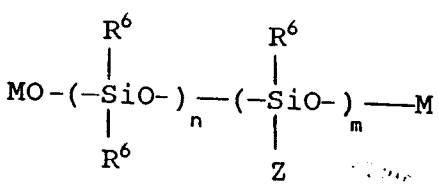

and

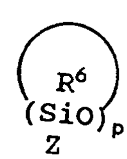

wherein each $R^6$ represents a monovalent saturated hydrocarbyl group, n and m are each numbers from 0 to about 1000, p represents 3 or 4, Z is a vinyl radical or hydrogen, and M is a silyl group selected from $R^aR^bR^cSi$ and $R^dR^eZSi$, wherein $R^a$,$R^b$,$R^c$,$R^d$, and $R^e$ are each monovalent saturated hydrocarbyl groups. The ratio of the total number of alkenyl groups present in (d) and (c) ranges from 0.8 to 1.2, i.e., the ratio of the total number of silicon-bonded hydrogen atoms to the total number of alkenyl groups ranges from 0.83-1.25:1. The Examples presented in Boardman show that the pressure sensitive adhesives prepared therein had low to moderate tack

properties. The Boardman patent does not teach that useful pressure sensitive adhesive properties (especially tack) can be obtained at SiH/SiVinyl ratios of greater than 1.25:1. It would be desirable to provide solventless or high solids-containing pressure sensitive adhesives having higher tack properties as well as high peel adhesion.

U.S. Patent No. 3,983,298 (Hahn et al.) is directed to a composition suitable for use as a pressure sensitive adhesive and obtained by mixing components consisting essentially of (a) 50-60 parts by weight of a solid, benzene-soluble resin copolymer consisting essentially of $R_3SiO_{1/2}$ units and $SiO_{4/2}$ units, (b) 40-50 parts by weight of a vinyl-terminated polydiorganosiloxane having a viscosity of from 20,000 to 1000,000 centipoise at 25°C., (c) a hydrogen-containing organopolysiloxane in an amount sufficient to provide from 1.0 to 20.0 silicon-bonded hydrogen atoms for every olefinically unsaturated radical in the total of (a) plus (b), and (d) a platinum-containing catalyst. It is pointed out in Hahn et al. that compositions of the prior art based on mixtures of a benzene soluble resin copolymer containing $R_3SiO_{1/2}$ units and $SiO_{4/2}$ units (hereinafter sometimes referred to as "MQ resin") and low viscosity silicones do not form pressure sensitive adhesive compositions.

U.S. Patent No. 4,774,297 (Murakami et al.) teaches the preparation of pressure sensitive adhesives using vinyl functional polysiloxanes having even higher viscosity than those used in the Hahn et al. patent discussed above. The patent to Murakami et al. is directed to a composition suitable for forming a pressure sensitive adhesive having excellent tack and adhesive strength, comprising (A) 30-70 parts by weight of a vinyl-terminated polydiorganosiloxane having a viscosity of at least 500,000 centipoise at 25°C, (B) 70-30 parts by weight of an organopolysiloxane containing $R_3SiO_{1/2}$ units and $SiO_{4/2}$ units, (C) an organohydrogensiloxane in an amount sufficient to provide 1-20 silicon-bonded hydrogen atoms per alkenyl group, (D) a platinum-containing catalyst, and (E) from 25-400 parts by weight of an organic solvent. In order to obtain a satisfactory product, Murakami et al. teach that it is essential that the vinylpolymer have a viscosity of at least 500,000 centipoise and preferably at least one million centipoise at 25°C.

European Patent Application No. 0269454 (Murakami et al.) discloses a composition suitable for forming a pressure sensitive adhesive having excellent tack and adhesive strength and comprising an alkenyl group-containing silicone polymer, a tackifying silicone resin, an organohydrogensiloxane, and a platinum-containing catalyst. According to the Murakami et al. (Murakami) reference, there is not specific restriction on the molecular weight of the alkenyl group-containing silicone polymer as long as no adverse effect accrues with respect to the workability of the pressure sensitive adhesive composition. If the pressure sensitive adhesive composition is solventless, the viscosity of the alkenyl group-containing silicone polymer is no more than 100,000 centipoise at 25°C. In a solvent-containing composition, the alkenyl group-containing silicone polymer should have a viscosity of at least one million centipoise at 25°C. The organohydrogenpolysiloxane should be present in an amount sufficient to provide 12 to 40 silicon-bonded hydrogen atoms per alkenyl group in the composition. The patent to Murakami et al. does not disclose a pressure sensitive adhesive composition using low viscosity vinyl-functional silicones wherein the composition has excellent peel adhesion and high tack properties.

U.S. Patent No. 4,988,779 (Medford et al.,) disclose a composition suitable for forming a pressure sensitive adhesive, the composition having a solvent content of no more than 5-10% by weight and comprising from 30 to 50 parts of a vinyl endblocked polydiorganosiloxane fluid having a viscosity of from 500 to 10,000 centipoise at 25°C., from 50 to 70 parts of a benzene soluble resin copolymer containing $R_3SiO_{1/2}$ units and $SiO_{4/2}$ units, an organopolysiloxane having silicon bonded hydrogen atoms, and a platinum catalyst. The hydrogen-containing organopolysiloxane is present in an amount sufficient to provide from 1.0 to 30.0 silicon bonded hydrogen atoms for every olefinically unsaturated radical in the composition. Although the composition disclosed in the Medford et al. patent uses a low viscosity vinyl-functional silicone, it is continually desirable to provide pressure sensitive adhesive compositions which use even lower viscosity vinyl-functional silicones.

It is desirable to provide solventless or high solids-containing, addition-curable polydiorganosiloxane compositions which cure to yield silicone pressure sensitive adhesives having high tack and excellent peel adhesive strength. It is further desirable to provide solventless or high solids-containing, addition-curable silicone pressure sensitive adhesive compositions which can be cured at relatively low temperatures to yield silicone pressure sensitive adhesives having high tack and excellent peel adhesive strength.

## Summary of the Invention

In the present invention, it was found that an addition-curable silicone composition containing an alkenyl-terminated polyorganosiloxane - having a viscosity of less than 500 centipoise at 25°C can be cured at relatively low temperature to form pressure sensitive adhesives with both high tack and high peel adhesion. These adhesive properties depend on the ratio of silicon-bonded hydrogen groups to silicon-bonded alkenyl groups which is within the range of the present invention. Unexpectedly, such compositions can be obtained at relatively low viscosity from proper design and selection of the alkenyl-terminated fluid and the alkenyl crosslinker

fluid or resin.

The present invention provides an organopolysiloxane composition curable to produce a pressure sensitive adhesive having high tack and high peel adhesion, comprising (A) a resinous copolymer made up of $R_3SiO_{1/2}$ units and $SiO_{4/2}$ units, (B) a hydride terminated organopolysiloxane, (C) an alkenyl silicone blend, (D) a catalyst, and optionally (E) a suitable solvent.

The composition of the present invention cures to form a pressure sensitive adhesive having a tack of greater than 200 grams/cm$^2$, preferably greater than 400 grams/cm$^2$ and a peel adhesion strength of greater than 25 ounces/inch. Although a solvent can be present in the composition, the composition does not require the presence of a solvent to improve workability in the uncured state. Furthermore this invention includes a method of making a pressure sensitive adhesive.

## Detailed Description of the Invention

The present invention is based upon the finding that vinyl or other alkenyl can be used as crosslinkers in organopolysiloxane pressure sensitive adhesives, and upon curing, provide pressure sensitive adhesives with high tack and higher peel adhesion.

The invention provides a curable organopolysiloxane pressure sensitive adhesive composition comprising:

(A) from about 50 to about 75 % by weight of the total weight of (A), (B) and (C) of the composition of a resinous copolymer comprising units of:

$$R_3SiO_{1/2}$$

and

$$SiO_{4/2}$$

where each R is a monovalent hydrocarbon radical having from 1 to about 6 carbon atoms, wherein the copolymer comprises from about 0.5 to about 5 % by weight, based on the total weight of the copolymer, of hydroxyl radicals, and the molar ratio of $R_3SiO_{1/2}$ units to $SiO_{4/2}$ units being between from about 0.6 to about 0.9;

(B) a hydride-terminated organopolysiloxane wherein (B) has a viscosity of from about 10 to about 1000 centipoise at 25°C, and has the general formula:

$$R^1_2HSiO(R^1_2SiO)_x(R^1HSiO)_ySiHR^1_2$$

where each $R^1$ is independently an alkyl group having from 1 to about 10 carbon atoms or an aryl group, the sum of x and y is from about 1 to about 500, and y is from 0 to about 10;

(C) an alkenyl silicone blend comprising

(i) from 0 to 90 mole % of an alkenyl-terminated organopolysiloxane polymer with a viscosity of from about 10 to about 500 centipoise at 25°C, and has the general formula:

$$R^2R^3_2SiO(R^3_2SiO)_zSiR^3_2R^2$$

where $R^2$ is an alkenyl group having from 1 to about 10 carbon atoms, $R^3$ is an alkyl group having from 1 to about 10 carbon atoms or an aryl group, z is from 1 to about 300, and

(ii) from 10 to 100 mole % of a silicon-bonded alkenyl crosslinker which is based on the total available alkenyl groups in the blend allowing for more than 2 silicon-bonded alkenyl groups per chain or molecule;

wherein (B) and (C) are present in amounts from about 25 to about 50 % by weight based on the total weight of (A), (B) and (C) and provide a total SiH/Sialkenyl ratio of about 1.1:1 to about 15:1;

(D) an effective amount of a hydrosilation catalyst; and

(E) from 0 to 40% by weight of the composition of an organic solvent.

The composition of the present invention cures to form a pressure sensitive adhesive having a tack of greater than 200 grams/cm$^2$, preferably greater than 400 grams/cm$^2$ and a peel adhesion strength of greater than 25 ounces/inch. Although solvent can be present in the composition, the composition does not require the presence of a solvent to improve workability in the uncured state. Furthermore this invention includes a method of making a pressure sensitive adhesive.

Component (A) of the composition of the present invention is a resinous organopolysiloxane copolymer which imparts peel and tack to the cured pressure sensitive adhesive prepared from the component. The resinous copolymer (A) comprises $R_3SiO_{1/2}$ units and $SiO_{4/2}$ units wherein R is a monovalent hydrocarbon radical having from 1 to about 6 carbon atoms.

Examples of radicals represented by R include alkyl radicals such as methyl, ethyl, and isopropyl; cycloaliphatic radicals such as cyclopentyl and cyclohexenyl; and the phenyl radical. At least, 99.5% of all R groups are alkyl groups, preferably methyl. Component (A) contains various combinations of units with the general formulas $R_3SiO_{1/2}$ and $SiO_{4/2}$, respectively. The molar ratio of $R_3SiO_{1/2}$ units to $SiO_{4/2}$ units is between from about 0.6 to about 0.9.

The resinous copolymer in Component (A) comprises from about 0.2 to about 5 % by weight, preferably from about 1 to about 3 % by weight, and most preferably from about 1.5 to about 3 % by weight, based on the total weight of the copolymer, of hydroxyl radicals. The hydroxyl radicals are bonded directly to the silicon atom of the $SiO_{4/2}$ units or the $R_3SiO_{1/2}$ units.

In practicing the invention, Component (A) may comprise from about 50 to about 75 % by weight of the composition. Preferably, Component (A) comprises from about 50 to about 70 % by weight, and most preferably from about 55 to about 62 % by weight of the composition. The composition weight is the total of the weights of (A), (B), and (C).

Methods for making the resinous copolymer (A) are known in the art. Reference is made, for example, to U.S. Patent No. 2,676,182 to Daudt et al., which is hereby incorporated by reference herein. In the Daudt et al. method, a silica hydrosol is reacted under acidic conditions with a source of triorganosiloxy units such as a hexaorganodisiloxane, e.g., hexamethyldisiloxane, or a hydrolyzable triorganosilane, e.g., trimethylchlorosilane, or mixtures thereof, and recovering a benzene soluble resin copolymer having $R_3SiO_{1/2}$ and $SiO_{4/2}$ units.

The resinous copolymer (A) is a solid, resinous material and is most often available as a solution in a solvent such as xylene or toluene, generally as a 40 to 60% by weight solution. For ease of handling of the composition of the present invention, one part of the solution of the resinous copolymer is usually dissolved in some or all of the hydride-stopped polysiloxanes (B) and the other part of the solution of the resinous copolymer is usually dissolved in some or all of the vinyl containing polysiloxanes (C), and the solvent is stripped from each of the resulting solutions to produce solutions of resinous copolymer (A) in the hydride-stopped polysiloxane (B) and in the vinyl containing polysiloxanes (C).

Component (B) is a hydride-terminated organopolysiloxane having a viscosity of from about 10 to 1000 centipoise at 25°C and having the general formula

$$\text{(I)} \qquad R^1_2HSiO(R^1_2SiO)_x(R^1HSiO)_ySiHR^1_2$$

wherein each $R^1$ is independently an alkyl group having from 1 to about 10 carbon atoms or an aryl group. The value for the sum of x and y is a number in the range of from about 1 to about 500, preferably from about 20 to about 400, and most preferably from about 60 to about 300. The value for y is a number in the range of from about 0 to about 10, preferably from about 0 to about 5, and most preferably 0.

The viscosity of the hydride-terminated organopolysiloxane (B) ranges from about 10 to about 1000 centipoise at 25°C, preferably from about 20 to about 750 centipoise at 25°C, and most preferably from about 100 to about 500 centipoise at 25°C.

Component (C) of the composition is a combination of (i) an alkenyl-terminated organopolysiloxane and (ii) an alkenyl containing organopolysiloxane. In practicing the invention, Components (B) and (C) may comprise from about 25 to about 50 % by weight of the composition. Preferably, Components (B) and (C) comprise from about 30 to about 50 % by weight, and most preferably from about 38 to about 45 % by weight of the composition. The composition weight is the total of the weights of (A), (B) and (C). In practicing the invention, components (B) and (C) are present in a sufficient amount to provide a Si-hydride/Si-alkenyl molar ratio of from about 1.1:1 to about 15:1.

Component (C) (i) is an alkenyl-terminated organopolysiloxane compatible with the mixture of (A), (B) and (C) (ii) and having the general formula

$$R^2R^3_2SiO(R^3_2SiO)_zSiR^3_2R^2$$

where $R^2$ is an alkenyl group having from 1 to about 10 carbon atoms, and $R^3$ is an alkyl group having from 1 to about 10 carbon atoms or an aryl group. The value for z is a number in the range of from about 1 to about 300, preferably from about 20 to about 250, and most preferably from about 60 to about 200.

The preferable alkenyl group for Component (C) is vinyl which can in some cases be the only alkenyl group for Component (C).

Component (C) (i) is present in the composition of this invention in an amount sufficient to provide a silicon-bonded alkenyl content within the range of 0 to about 90 mole %, preferably from about 20 to about 80 mole %, and most preferably from about 40 to about 70 mole %, based on the total silicon-bonded alkenyl content of (C) (i) and (C) (ii). It is within the scope of this invention that (C) (i) is not present at all.

The viscosity of the alkenyl-terminated organopolysiloxane (C) (i) ranges from about 10 to about 500 centipoise at 25°C, preferably from about 20 to about 250 centipoise at 25°C, and most preferably from about 60 to about 200 centipoise at 25°C. There are preferably about two silicon bonded alkenyl atoms per molecule of (C)(i).

The term "compatible" means that the required amount of organoalkenylpolysiloxane (C) (i) is at least partially soluble in the mixture of (A), (B) and (C) (ii) and will exist in a uniformly dispersed state in the composition of this invention while participating in the curing reaction, until the cure has been effected.

Component (C)(ii) is from 10 to 100 mole % of a alkenyl-containing organopolysiloxane containing more than 2 silicon-bonded alkenyl atoms per chain and is selected from the group consisting essentially of:

(1) linear alkenyl-containing organopolysiloxane fluids having the general formula

$$R^2R^3{}_2SiO(R^3{}_2SiO)_m(R^2R^3SiO)_nSiR^3{}_2R^2$$

where each $R^3$ is independently an alkyl radical having from about 1 to about 10 carbon atoms or an aryl radical; $R^2$ is either $R^3$ or an alkenyl radical having from about 1 to about 10 carbon atoms such as vinyl allyl, propenyl or hexenyl; the sum of m+n is at least about 150, preferably is at least about 250, and most preferably is at least about 1000. The weight % of alkenyl groups is defined by the weight % of alkenyl units to the total weight of the organopolysiloxane. This ranges from about 0.05 to about 5.0 % by weight, preferably from about 0.1 to about 3.5 % by weight, and most preferably from about 0.5 to about 3 % by weight of the total weight of organopolysiloxane; and/or

(2) resinous alkenyl-containing siloxane copolymers wherein said silicon bonded alkenyl group is a combination of $(R^1{}_pR^2{}_qSiO_{1/2})$and/or $(R^1{}_rR^2{}_sSiO_{2/2})$ and $R^3SiO_{3/2}$ and/or $SiO_{4/2}$ containing resinous copolymer where each $R^1$ is independently an alkyl radical having from about 1 to about 10 carbon atoms or an aryl radical; each $R^2$ is independently an alkenyl radical having from about 1 to about 10 carbon atoms such as vinyl, allyl, propenyl or hexenyl; p is 0, 1, 2, or 3; q is 0, 1, 2, or 3; r is 0, 1, or 2; s is 0, 1, or 2; p+q=3; and r+s=2. The weight % of alkenyl groups is defined by the weight % of alkenyl units to the total weight of the organopolysiloxane. This ranges from about 0.05 to about 5.0 % by weight, preferably from about 0.1 to about 3.5 % by weight, and most preferably from about 0.5 to about 3 % by weight of the total weight of organopolysiloxane. Component (C) (ii is present in the composition of this invention in an amount sufficient to provide a silicon-bonded alkenyl content in the composition from about 10 to about 100 mole %, preferably from about 20 to about 80 mole %, and most preferably from about 30 to about 60 mole %.

Component (C)(ii)(1) is preferably a vinyl-containing copolymer crosslinker. Component (C)(ii)(2) is preferably a dimethylvinyl-containing resinous copolymer crosslinker or a methylvinyl-containing resinous copolymer crosslinker.

Component (B) and component (C) are present in sufficient amount to provide a total SiH/Sialkenyl ratio of about 1.1:1 to about 15:1; preferably from about 1.26:1 to about 5:1; and most preferably from about 1.3:1 to about 4:1. The specific weight requirement of (B) and (C), at a selected SiH/Sialkenyl ratio, depends on the viscosity, or the value of x of Component (B), as well as the combination of the viscosity of Component (C) (i) used and the chosen alkenyl crosslinker (C)(ii)(1) and/or (C)(ii)(2). Therefore to achieve proper adhesive properties, it is important to control the molar ratio of SiH/Sialkenyl which subsequently defines the weight amounts of Components (B) and (C) needed to satisfy that particular ratio.

Component (D) of the composition of the present invention is a catalyst which promotes the hydrosilation reaction. Useful catalysts for facilitating the hydrosilation curing reaction include precious metal catalysts such as those which use ruthenium, rhodium, palladium, osmium, iridium, and platinum, and the complexes of these metals. Examples of suitable hydrosilation catalysts for use in the present invention are disclosed, for example, in U.S. Patent Nos. 3,159,601 and 3,159,662 (Ashby); 3,220,970 (Lamoreaux); 3,914,730 (Karstedt); 3,516,946 (Modic), and 4,029,629 (Jeram); all of the foregoing patents being hereby incorporated by reference.

Preferably, the hydrosilation catalyst used in the present invention is a platinum-containing catalyst. Suitable platinum-containing hydrosilation catalysts include any of the well known forms of platinum that are effective for catalyzing the reaction of silicon-bonded hydrogen atoms with silicon-bonded vinyl groups, such as finely divided metallic platinum, platinum on a finely divided carrier such a alumina, compounds of platinum such a chloroplatinic acid and complexes of platinum compounds.

Other suitable platinum-containing hydrosilation catalysts for use in the present invention include the platinum hydrocarbon complexes described in U.S. Patent Nos. 3,159,601 and 3,159,662 to Ashby, and the platinum alcoholate catalysts described in U.S. Patent No. 3,220,970 to Lamoreaux, as well as the platinum catalysts of U.S. Patent No. 3,814,730 to Karstedt. Additionally, the platinum chloride-olefin complexes described in U.S. Patent No. 3,516,946 to Modic are also useful herein. All of the aforesaid catalysts are thermally activated. Also useful are the photoactive platinum catalysts such as those of U.S. Patent No. 4,510,094 to Drahnak. All of the U.S. Patents cited in the instant paragraph are incorporated by reference into the present disclosure.

Catalysts which are soluble in the mixture of (A), (B) and (C) are preferred, particularly if optical clarity is desired.

The hydrosilation catalyst (D) is present in the composition of this invention in an amount sufficient to provide at least 0.1 part by weight platinum for one million parts by weight of the combined weight of (A), (B), and (C). Frequently, such small amounts of catalyst are poisoned by trace amounts of impurities in the composition so it is advantageous to use the platinum catalyst in such quantities to provide at least 1.0 parts per million (ppm). The amount of platinum-containing catalyst is not critical with respect to the upper limit but its cost would suggest that excessive quantities be avoided. Amounts of up to 200 ppm platinum are not unusual but preferably from 1 to 70 parts by weight of platinum for every one million parts by weight of the total of (A), (B), and (C)

used.

The compositions of the present invention comprise 0 to about 40 % by weight organic solvent, preferably from about 0 to about 20 % by weight organic solvent, and most preferably from about 0 to about 10 % by weight of the organic solvent known as Component (E). Suitable organic solvents include any of the solvents conventionally used with organosiloxanes and having a boiling point below approximately 250°C, such as aromatic hydrocarbons, e.g., benzene, toluene, and xylene; aliphatic hydrocarbons such as hexane, heptane, and cyclohexane; naphthas such as petroleum ether and refined naphthas and oxygenated solvents such as hydrocarbon ethers, e.g., tetrahydrofuran and the dimethylether of ethylene glycol; ketones such as methyl isobutyl ketone and esters such as thenyl acetate and the like. Mixtures of organic solvents can also be used as Component (E).

The components of the compositions of this invention can be mixed in any manner such as in bulk or in organic solvent. Since the resinous copolymer (A) is a solid and is conveniently prepared and handled in an organic solvent, the preparation of the composition of this invention preferably uses an organic solvent when mixing resins. The organic solvents can be any of the solvents recited above in connection with component (E). The mixing of the components can be accomplished by any of the techniques known in the art, such as milling, blending, stirring, and the like, either in batch or in continuous process.

The curing of the composition of the present invention proceeds by the addition reaction of the silicon-bonded alkenyl groups in (C) with the hydride groups in (B) in the presence of the catalyst of (D). Stability, and consequently greater peel adhesion and tack properties, is provided to the cured pressure sensitive adhesive composition by adjusting the number of alkenyl groups available for crosslinking.

The composition of this invention can be prepared, with or without the aid of solvent, by simply mixing (A), (B), (C), and (D) together in the stated proportions. The order of mixing of the components is not critical, except that (C) and (D) are preferably brought together last. This is referred to herein as a one-component system. However, the best method of preparing the composition of this invention is based on a two-component system, wherein two blends are used, one comprising the resinous copolymer (A), which may be dissolved in about an equal weight of an organic solvent to facilitate mixing, with organopolysiloxane (B) and the other blend comprising the resinous copolymer (A), which also may be dissolved in about an equal weight of an organic solvent to facilitate mixing, with organopolysiloxane (C), so as to form premade intermediates. This method is preferred because it facilitates control of the SiH/Sialkenyl ratio. To obtain compositions having at least 90% and preferably about 95% solids, the copolymer/organopolysiloxane blends should be devolatilized under conditions equivalent to heating for 1 hour at about 70 °C at reduced pressure in order to obtain optimum pressure sensitive adhesive properties. Obviously, excessively high temperatures should be avoided when components (A) and (B) or their mixtures are being devolatilized. A temperature of about 120 °C, and preferably about 100 °C, should not be exceeded. The mixture of (A), (B) and solvent is devolatilized at a temperature of no more than about 100 °C at full vacuum. Additional solvent may be added to the cooled, devolatilized mixtures to obtain a desired viscosity. Catalyst (E) is added to the devolatilized mixture of (A) and (B) to complete the composition of the first component of the two-component system. The second mixture is prepared by blending (A) and (C)(i) and/or (C)(ii), then devolatilizing the blend under vacuum at a temperature of no more than about 100 °C at full vacuum. A small amount of addition-cure inhibitor and additional solvent may also be added to the cooled, devolatilized mixture of (A) and (C) to obtain a desired viscosity. The final composition is completed by mixing the two components in appropriate amounts.

Thus, in a preferred embodiment of the composition of the present invention, the composition comprises by weight:

(1) a solventless mixture comprising by weight from about 50 to about 75 % by weight of the composition of (A) and from about 25 to about 50 % by weight of the composition of (B) based on the total weight of (A) and (B) in the mixture;

(2) a solventless mixture comprising by weight from about 50 to about 75 % by weight of the composition of (A) and from about 25 to about 50 % by weight of the composition of (C) based on the total weight of (A) and (C) in the mixture; and

(3) a hydrosilation catalyst.

Small amounts of additional ingredients may be added to the composition of this invention if desired. For example, antioxidants, pigments, stabilizers, fillers, and the like, may be added as long as they do not materially reduce the pressure sensitive adhesive properties of these compositions. Volatile additives are preferably added after any solvent removal operations have been completed.

When components (A), (B), (C), and (D) are mixed, the composition is catalyzed and beings to cure at a rate which is directly proportional to the temperature of the composition. The composition of this invention can be cured at room temperature or cured by heating. When heat curing is used, a temperature of about 80 °C to about 200 °C can be used, preferably from about 105 °C to about 200 °C, and most preferably from about 135

°C to about 200 °C, However, the composition of this invention will cure at low temperatures at about 105 °C, at 10 minutes or less to produce pressure sensitive adhesives having high peel adhesion and high tack. The exceptional pressure sensitive adhesive characteristics of these compositions are developed when the composition is cured and the cured composition is essentially free of organic solvent.

Preferably, the uncured composition of this invention should be used within a few hours after being prepared, although this time interval from preparation to use, otherwise known as "shelf life", can be extended to several days by cooling the mixture to a temperature of 5 °C or below. Equally long or longer "shelf life" can be realized by mixing a platinum catalyst inhibitor in the second component if a two-component system is used with the curable mixture.

Platinum catalyst inhibitors which are useful in the composition of this invention and which display varying lengths of cure time inhibition in our compositions are those described in U.S. Patent Nos. 3,188,299; 3,199,300; 3,192,191; 3,344,111; 3,383,356; 3,445,420; 3,453,233; 3,453,234 and 3,532,649, and others which might be known in the art. All of the patents cited in the instant paragraph are incorporated by reference herein. Concrete examples of inhibitors which can be used in the composition of the present invention include the ene-ynes, such as 3-methyl-3-pentene-1-yne and 3,5-dimethuyl-3-hexene-1-yne; and the alkynyl alcohols, such as 3-methyl-1-butyne-3-ol; 3,5-dimethyl-1-hexyne-3-ol; 3-methyl-1-pentyne-3-ol; and phenylbutynol; the unsaturated ester, such as alkyl and substituted alkyl maleates; and polymethylvinylcycosiloxanes. The preferred inhibitors for use in this invention are the dialkylmaleates and most preferably dimethylmaleate.

The effectiveness of a platinum catalyst inhibitor depends on many factors such as its chemical composition, its physical properties, its concentration, and the like. For the purposes of this invention, an effective amount of any particular platinum catalyst inhibitor can be determined by routine experimentation. Since many platinum catalyst inhibitors are relatively volatile it is preferable to add them to the compositions of this invention after any heating and/or vacuum operations of the preparative process have been completed. For maximum effectiveness, however, a platinum catalyst inhibitor should be added to the composition of this invention at least simultaneously with, and preferably after the mixing of components (A), (C)(i) and/or (C)(ii) or parts containing them.

The compositions of this invention, when containing a platinum catalyst inhibitor, can be cured by removing the inhibitor, for example, by evaporation at room temperature or higher. Curing can also be accomplished in most cases by heating the composition to a temperature of from about 80°C to about 200°C, preferably from about 105°C to about 200°C, and most preferably from about 135°C to about 200°C.

The uncured composition of this invention can be used as a solution in one or more of the organic solvents described above or the composition can be used with no solvent present. While it is possible to use as much as 40 percent of an organic solvent based on the total weight of the composition, the presence of solvent is not required. If the presence of solvent is desired, this can be accomplished simply by not removing all of the solvent that is used in the preparation of the composition. Alternately, all of the solvent that is used in the preparation of the composition can be removed and the desired amount of the same or another solvent can be added. It will be obvious to those skilled in the art that in the case where the solvent that is used to aid in the application of the composition of this invention has a higher boiling point than the solvent used in their preparation, the necessary solvent change can be accomplished in two steps as described above or in a one step process wherein the higher boiling point solvent is present in the mixture during the removal of the lower boiling solvent. If, during the preparation of the composition of this invention, any portion of the solvent is removed, particularly if heat and/or vacuum is used to remove the solvent, it is preferred to remove the solvent prior to the addition of other volatile components such as inhibitors or additives. The removal of solvent can be accomplished by any of the known techniques such as entrainment in a stream of inert gas, evaporation, distillation, thin film stripping, spray drying and the like, and at any combination of temperature and pressure where the temperature is not allowed to exceed approximately 120 °C, preferably about 100 °C.

The compositions of this invention are useful as pressure sensitive adhesives and will readily stick to a solid support, whether flexible or rigid. The composition is simply applied to the surface of the support by any suitable coating means such as rolling, spreading, spraying, and the like, and cured as described above. It should be understood that the use of the compositions of this invention encompasses not only the application of the completed, uncured composition on the surface. For example, it is within the scope of this invention to apply a layer of a mixture of (A), (B), and (C) to a solid support and then add the platinum catalyst (D), the needed mixing being accomplished by diffusion of (D) into the layer of (A), (B), and (C). It is preferred to delay to curing reaction until (D) is thoroughly diffused into the layer on the support. Any solvent that is present in the cured composition is preferably allowed to evaporate before the surface bearing the composition is adhered to a substrate, although this is not necessary.

The surface of the support and the substrate to which the support is adhered may be any known solid material such as metals, e.g., aluminum, silver, copper, iron, and their alloys; porous materials such as paper,

wood, leather, and fabrics; organic polymeric materials such as polyolefins, e.g., polyethylene and polypropylene; fluorocarbon polymers such as polytetrafluoroethylene and polyvinylfluoride, silicone elastomers, silicone resins, polystyrene; polyamides, polyimides, polyesters, and acrylic polymers, painted surfaces; siliceous materials such as concrete, bricks, cinderblocks, and glass, e.g., glass cloth and the like. Porous materials such as glass cloth are often impregnated with a substance that will prevent the migration of the PSA from one surface to another surface of the support. It is also well known to chemically treat the surface of a fluorocarbon polymer support to enhance the adhesion of a PSA to said surface.

Solid supports bearing the cured compositions of this invention are reliably adhered to any solid substrate because the compositions possess the desirable combination of high tack and good adhesive strength.

Useful articles which can be prepared with the PSAs of this invention include pressure sensitive adhesive tapes, labels, emblems, and other decorative or informative signs, and the like. An especially useful article is one comprising a support, flexible or rigid, that can withstand extreme temperatures, hot and/or cold, and carrying on at least one surface thereof the polyorganosiloxane PSAs of this invention. Such an article makes full use of the stability at high temperatures and the flexibility at low temperatures that the PSAs of this invention possess.

A preferred article is a pressure sensitive adhesive tape comprising an impregnated glass cloth, a polyester polymer, a polyimide polymer, or a chemically treated fluorocarbon polymer support carrying on at least one surface thereof the cured compositions of this invention.

In order that persons in the art may better understand the practice of the present invention, the following Examples are provided by way of illustration, and not by way of limitation. Additional background information known in the art may be found in the references and patents cited herein, which are hereby incorporated by reference.

## Examples

In the shorthand notation of polymer structure below, the following apply:

M represents $(CH_3)_3SiO_{1/2}$
$M^H$ represents $(CH_3)_2(H)SiO_{1/2}$
$M^{Vi}$ represents $(CH_3)_2(CH_2{=}CH)SiO_{1/2}$
D represents $(CH_3)_2SiO_{2/2}$
$D^{Vi}$ represents $(CH_3)(CH_2{=}CH)SiO_{2/2}$
T represents $(CH_3)SiO_{3/2}$
Q represents $SiO_{4/2}$

Unless indicated otherwise, all silicone resins and fluids are available from General Electric Silicone Division, Waterford, New York.

### Example 1: Preparation of component mixtures

The preparation of high solids (e.g. 95%) mixtures curable to form silicone pressure sensitive adhesive have been disclosed in Docket 60SI-1449. The examples in this disclosure uses a MQ resin of $R_3SiO_{1/2}$ (or M) unit and $SiO_{4/2}$ (or Q) unit at a ratio of about 0.7, and of about 2 wt. % of silicon-bonded hydroxy group. To illustrate, **component A** of 58 wt.% MQ resin and 42 wt.% vinyl-stopped fluid is made by mixing 279 grams of the MQ resin (60% solid in toluene) with 121 grams of a vinyl-stopped dimethylsilicone ($M^{vi}D_{105}M^{vi}$) fluid, and 0.40 g of Karstedt Pt-catalyst (5 % Pt), then vacuum stripped to remove toluene solvent to obtain 95.6% solid mixture. The mixture has a descriptive vinyl equivalent weight of 3986 grams per equivalent of vinyl on the vinyl-stopped silicone fluid.

**Component B** is made of 58 wt.% MQ resin and 42 wt.% of a hydride-stopped $M^HD_{121}M^H$ silicone fluid. This is prepared by mixing 193 grams of the MQ resin (60% solid in toluene) with 84 grams of the hydride fluid. The volatile solvent was then removed through a vacuum stripper at temperature 60 °C or less. The final mixture was determined to have 95.2% solid. The hydride silicone fluid has a descriptive hydride equivalent weight, HEW, of 4560 grams per equivalent of silicon-hydride. Wherein HEW is determined by dividing the total molecular weight of silicone polymer over the number of silicon-bonded hydride groups on the polymer chain.

### Example 2. T-Resin Crosslinker, $D^{vi}$ Containing

The crosslinker has a general structure of $MD^{vi}_xT$ and a M/T ratio of 1.0 based on the inputs ratio and a vinyl content of 2.6 wt.% or a vinyl equivalent weight, VEW, of 1038. This resin was prepared to 66.7% solid in toluene.

A mixture comprising 5.35 grams of Component A, 10.0 grams of Component B, 0.21 gram of the $MD^{vi}_{x}T$ crosslinker, 37 ppm Pt catalyst and 0.035 grams of dimethyl maleate was prepared. The composition has a calculated SiH/SiVinyl ratio of 1.30, a MQ resin of 57.10 wt.%, and a 20% of the crosslinker vinyl, and an averaged VEW of 3396.

The mixture was applied, using a wire-wound rod, over a 1 mil thick polyester film. The film was cured for 3 minutes @ 150 °C. A residue-free pressure-sensitive adhesive tape was obtained. The cured silicone adhesive has a 1.7 mil thickness, a peel adhesion of 35 oz/in against a clean steel plate, and a tack adhesion of 510 grams/$cm^2$, measured on a Polyken probe tack tester.

**Examples 3 to 7: TQ-Resin Crosslinker, Containing $D^{vi}$**

A resinous silicone copolymer of the general structure, $M_{0.8}D^{vi}_{0.12}T_{0.5}Q_{0.5}$, was prepared and used as crosslinker here. It was calculated to bear 2.6 wt.% of vinyl group and a VEW of 1038. This crosslinker is a clear gum due to the presence of T unit in the resin.

Curable compositions were prepared by mixing measured amount of components A and B (from Example 1) with the crosslinker such that the ratio of SiH to SiVinyl remained 1.30 and the vinyl group of the crosslinker to the total available vinyls in the mixture increased from 20 to 100 mol.%, along with about 37 ppm of Pt catalyst and 0.035 g of dimethyl maleate as room temperature inhibitor.

From these compositions, cured adhesives were made, cured, and measured their adhesive properties as described in Example 2. They all cured to residue-free. The corresponding wt.% MQ, equivalent vinyl of crosslinker, the averaged <VEW>, as well as the cured adhesive properties are shown in the following Table I.

TABLE I

| Expt. No. | Eq. % X-ker | SiH/Sivyl | Wt. % MQ | Avg. <VEW> | Thickness Mil. | Peel, oz/in Steel Plate | Tack Adh. grams/cm2 |
|---|---|---|---|---|---|---|---|
| 3 | 20.00 | 1.30 | 57.30 | 3397 | 1.80 | 39 | 478 |
| 4 | 50.40 | 1.30 | 56.40 | 2500 | 1.90 | 30 | 404 |
| 5 | 67.40 | 1.30 | 55.70 | 2000 | 1.60 | 30 | 374 |
| 6 | 77.50 | 1.50 | 55.60 | 1700 | 1.80 | 25 | 312 |
| 7 | 100.00 | 1.50 | 54.50 | 1038 | 1.60 | 25 | 306 |

As the results showed, pressure sensitive adhesive with good peel and tack adhesion properties are obtained from a alkenyl blend of from about 20 mol.% to about 100 mol.% crosslinker. Furthermore, cured tape with good adhesive properties was made from a blend of VEW of about 1038 grams per vinyl moiety.

**Examples 8 to 12: TQ-Resin Crosslinker, Containing $D^{vi}$**

The same crosslinker as in Examples 3 to 7 was used here. To illustrate the importance of SiH to SiVinyl ratio of compositions in this disclosure to the cured adhesive properties, the following example compositions were prepared. By mixing measured amount of Components A and B with the crosslinker such that about 20 mol.% of the total vinyls was the crosslinker vinyl. The corresponding wt.% MQ, SiH to SiVinyl ratio, the averaged <VEW> of the compositions, as well as the cured adhesive thickness, peel and Polyken tack adhesion values are shown in Table II.

TABLE II

| Expt. No. | Eq. % X-ker | SiH/Sivyl | Wt. % MQ | Thick-ness Mil. Plate | Peel, oz/in Steel/cm2 | Tack Adh. grams | Cure Quality |
|---|---|---|---|---|---|---|---|
| 8 | 50.40 | 1.00 | 56.10 | 1.90 | <10 | N/A | Residues |
| 9 | 20.00 | 1.00 | 57.30 | 2.10 | 51 | 466 | Residues |
| 10 | 20.00 | 5.00 | 57.80 | 1.60 | 28 | 268 | No residue |
| 11 | 20.00 | 10.00 | 58.00 | 1.70 | 26 | 290 | No residue |
| 12 | 20.00 | 15.00 | 58.00 | 1.90 | <10 | N/A | Slight residue |

This series example illustrates the importance of having a SiH to Sivinyl ratio from about 1.0 to about 15.0 to have good cure response. Outside this preferred range, slower or even incomplete cure can occur.

**Examples 13 to 16: Q-Resin Crosslinker, $D^{vi}$ Containing**

To illustrate the utility of various copolymer structure of Q unit based resins, the examples here use $MD^{vi}_{Y}Q$ resin crosslinkers of various vinyl contents and M/Q ratios. The corresponding wt.% vinyl, Crosslinker VEW, molar M/Q ratio of these crosslinkers are shown in Table III. The compositions containing these crosslinker are shown in Table IV with the molar % of vinyl being crosslinker vinyl moiety, SiH/SiVinyl ratio, wt.% MQ level and the averaged <VEW> of the mixture compositions along with the properties of the tapes which were made according to the procedure detailed in Example 2.

TABLE III

| Expt. | Wt.% Vinyl in X-linker | X-ker VEW | Molar M/Q (Note: *) |
|---|---|---|---|
| 13 | 3.2 | 844 | 0.8 |
| 14 | 2.7 | 1000 | 0.62 |
| 15 | 2.7 | 1000 | 0.8 |
| 16 | 1.5 | 1800 | 0.8 |

TABLE IV

| Expt. No. | Eq. % X-ker | SiH/Sivyl | Wt. % MQ | Avg. <VEM> | Thickness Mil. | Peel, oz/in Steel Plate | Tack Adh. grams/cm2 |
|---|---|---|---|---|---|---|---|
| 13 | 20.00 | 1.30 | 57.40 | 3358 | 1.50 | 35 | 364 |
| 14 | 20.00 | 1.30 | 57.40 | 3389 | 1.70 | 36 | 426 |
| 15 | 16.80 | 1.35 | 57.50 | 3484 | 1.80 | 41 | 590 |
| 16 | 20.00 | 1.30 | 57.00 | 3549 | 1.60 | 33 | 444 |

As shown in Table IV, good adhesive properties were achieved by using crosslinker of VEW at as low as about 844. Furthermore, resinous copolymers of various M/D/Q structures are effective crosslinker for the making of pressure sensitive adhesives.

**Examples 17 to 18: Q-Resin Crosslinker, $M^{vi}$ containing**

A $M^{vi}$-, instead of $D^{vi}$, containing resinous crosslinker was prepared and has the descriptive structure of $M_{0.755}M^{vi}_{x}Q$, containing about 0.93 wt.% vinyl. The corresponding VEW is 2903 grams per equivalent of silicon-bonded vinyl. This is a solid material at room temperature.

The composition of Example 17 is prepared by adding 0.24 gram of the crosslinker to the mixture of 5.35 grams of Component A, 10.0 grams of Component B (Example 1), 37 ppm of Pt catalyst, and 0.035 g of dimethyl maleate. The crosslinker vinyl represents about 13.3 mol. % of the total vinyl blend. The mixture yields a SiH/Si-Vinyl ratio of 1.41, a MQ resin of 57 wt.%, and an averaged <VEW> of 3842 grams per vinyl moiety. A 1.50 mil cured adhesive on 1.0 mil poly(ethylene terephthalate) film was made and has a peel adhesion of 40 oz/in. and a Polyken tack of 376 g/cm$^2$, and has no residue.

In Example 18, only this $M_{0.755}M^{vi}{}_xQ$ crosslinker, instead of a blend as shown in Example 17, was used as the source of reactive vinyl. This 100% crosslinker composition is prepared by mixing 1.21 grams of the crosslinker with 10.0 grams of Component B (Example 1), about 37 ppm of Pt catalyst, and 0.035 g of dimethyl maleate. The mixture has a SiH/SiVinyl ratio of 2.10, a MQ resin of 51.4%, and an averaged <VEW> of 2903 grams per vinyl moiety which is identical to that of the crosslinker. A residue-free, completely cured silicone pressure sensitive adhesive tape was made. A peel adhesion of 33 oz/in, and a Polyken tack of 396 g/cm$^2$ was measured on a 1.60 mil adhesive on a 1 mil polyester film.

**Example 19: Linear Silicone Polymer, $D^{vi}$ containing**

A vinyl-containing silicone polymer of $M^{vi}D_{142}D^{vi}{}_{4.8}M^{vi}$ structure was used as crosslinker. The calculated wt.% vinyl of this crosslinker was 1.6 or a VEW of 1633 grams per vinyl moiety. A mixture composition was prepared by mixing the following inputs: 0.22 g of this crosslinker, 5.35 g of Component A, 10.0 g of Component B, 37 ppm of Pt catalyst, and 0.035 g of dimethyl maleate inhibitor. The mixture has a MQ resin of 57 wt.%, a SiH/SiVinyl ratio of 1.30 and a 20 mol. % crosslinker vinyl.

A 1.7 mil cured adhesive from this composition on a 1.0 mil polyester was made and has a peel adhesion of 31 oz/in and a Polyken tack of 348 g/cm$^2$.

It is understood that various other modifications will be apparent to and can be readily made by those skilled in the art without departing from the scope and spirit of the present invention. Accordingly, it is not intended that the scope of the claims appended hereto be limited to the description set forth above but rather that the claims be construed as encompassing all of the features of patentable novelty which reside in the present invention, including all features which would be treated as equivalents thereof by those skilled in the art to which the invention pertains.

## Claims

1. A curable organopolysiloxane composition comprising:
(A) from about 50 to about 75 % by weight of the total weight of (A), (B) and (C) of the composition of a resinous copolymer comprising units of:
$$R_3SiO_{1/2}$$
and
$$SiO_{4/2}$$
where each R is a monovalent hydrocarbon radical having from 1 to about 6 carbon atoms, wherein the copolymer comprises from about 0.5 to about 5 % by weight, based on the total weight of the copolymer, of hydroxyl radicals, and the molar ratio of $R_3SiO_{1/2}$ units to $SiO_{4/2}$ units being between from about 0.6 to about 0.9;
(B) a hydride-terminated organopolysiloxane wherein (B) has a viscosity of from about 10 to about 1000 centipoise at 25°C, and has the general formula:
$$R^1{}_2HSiO(R^1{}_2SiO)_x(R^1HSiO)_ySiHR^1{}_2$$
where each $R^1$ is independently an alkyl group having from 1 to about 10 carbon atoms or an aryl group, the sum of x and y is from about 1 to about 500, and y is from 0 to about 10.
(C) an alkenyl silicone blend comprising
(i) from 0 to 90 mole % of an alkenyl-terminated organopolysiloxane polymer with a viscosity of from about 10 to about 500 centipoise at 25°C, and has the general formula:
$$R^2R^3{}_2SiO(R^3{}_2SiO)_zSiR^3{}_2R^2$$
where $R^2$ is an alkenyl group having from 1 to about 10 carbon atoms, $R^3$ is an alkyl group having from 1 to about 10 carbon atoms or an aryl group, z is from 1 to about 300, and
(ii) from 10 to 100 mole % of a silicon-bonded alkenyl crosslinker which is based on the total available alkenyl groups in the blend allowing for more than 2 silicon-bonded alkenyl groups per chain or molecule; wherein (B) and (C) are present in amounts from about 25 to about 50 % by weight based

on the total weight of (A), (B) and (C) and provide a total SiH/Sialkenyl ratio of about 1.1:1 to about 15:1;

(D) an effective amount of a hydrosilation catalyst; and

(E) from O to about 40% by weight of the composition of an organic solvent based on the total weight (A), (B), (C), (D) and (E).

2. The composition set forth in claim 1 wherein R, $R^1$ and $R^3$ are methyl and y is 0.

3. The position set forth in Claim 1 or Claim 2 wherein the total SiH/Sialkenyl ratio is from about 1.26:1 to about 5:1.

4. The composition set forth in claim 1 wherein said (C)(ii) silicon bonded alkenyl crosslinker is a linear alkenyl-containing organopolysiloxane having the general formula

$$R^2R^3{}_2SiO(R^3{}_2SiO)_m(R^2R^3SiO)_nSiR^3{}_2R^2$$

where $R^2$ and $R^3$ are defined in claim 1; and the values of m and n are set forth to yield a weight % alkenyl, defined by the weight percentage of alkenyl groups to the polymer chain being from about 0.05 to about 5.0 % by weight.

5. The composition set forth in claim 1 wherein said (C) (ii) silicon bonded alkenyl organopolysiloxane is a $(R^1{}_pR^2{}_qSiO_{1/2})$ and/or $(R^1{}_rR^2{}_sSiO_{2/2})$ and $R^3SiO_{3/2}$ and/or $SiO_{4/2}$ containing resinous copolymer where $R^1$, $R^2$ and $R^3$ are defined in claim 1; p and q are independently 0, 1, 2 or 3; and r and s are independently 0, 1 or 2.

6. The composition set forth in claim 5 wherein $R^2$ is vinyl.

7. The composition set forth in any preceding claim, wherein (D) is a transition metal complex catalyst.

8. The composition set forth in any preceding claim further comprising an inhibitor for the hydrosilation catalyst.

9. A method of using a pressure sensitive adhesive to produce a pressure sensitive adhesive surface comprising the steps:

(i) applying the curable composition as defined in claim 1 to at least one surface of a support; and

(ii) heating said composition applied in step (i) to a temperature from between about 80 °C to about 250 °C, to cure said composition cures.

10. The method set forth in claim 9 wherein the support is a solid support or a flexible support.